# EUROPEAN PATENT SPECIFICATION

(11) **EP 2 466 810 B1**
(45) Date of publication and mention of the grant of the patent: **23.09.2015**
(21) Application number: 10290663.3
(22) Date of filing: 17.12.2010
(51) Int. Cl.: H04L 12/725

(54) **Method and router for a service dependent routing**
Verfahren und Router für ein dienstabhängiges Routing
Procédé et routeur pour un routage en fonction du service

(43) Date of publication of application: 20.06.2012
(73) Proprietor: ALCATEL LUCENT, 92100 Boulogne-Billancourt (FR)
(72) Inventor: Schwan, Nico, 70197 Stuttgart (DE); Shanbhag, Shashank, MA 01002 (US)
(74) Representative: Knecht, Ulrich Karl

(56) References cited:
- US-A1- 2003 086 422
- US-A1- 2007 153 808
- US-A1- 2007 291 791

## Description

The present invention relates to a method and a router for service named routing in a packet based communication network. The communication network comprises at least two servers providing at least one service and a plurality of routers.

Current Internet architecture relies on network addresses and host identities through URLs (URL = Uniform Resource Locator) to locate content. Locating content is primarily based on resolution of host identities into a network address, i.e. IP addresses (IP = Internet Protocol), followed by the actual retrieval of content using the network address. Today various balancing systems are built on top of the IP layer in order to redirect nodes to the closest content and/or the service, i.e. to access the content and/or the service, respectively. However, IP addressed based routing does not provide a highly flexible and scalable approach for service provision when the shortest route to the server is a minor criteria. For example, compute intensive services may require much more computing time for provisioning service than the time required for communication packet and/or data packet transport through the communication network from the server to the client.

US 2007/0291791 A1 discloses a method of processing data received at a hardware platform forming a node in a data communication network, a data communication network running distributed software over platforms defining nodes in the network, data processing hardware at each of the platforms and a network platform interface hardware. The network platform interface hardware comprises a quality of service manager for receiving data from the network and prioritizing the received data according to predetermined classes of data service, a security manager for authenticating data received from the network based on a predetermined security policy and allowing only that data to pass through the platform that has been authenticated, and a data exploitation manager for detecting receipt at the platform of predetermined types of data of interest to the platform. Routing tables are coupled with the quality of service manager for determining the routing of the data to a destination, and a protocol engine is provided for specifying the protocol to be used in routing the data.

US 2003/0086422 A1 discloses a method for controlling routing of data and a respective system and a respective router. It is determined whether at least one data flow is active. The at least one data flow has an ingress portion of a current ingress path to a first point from a second point and an egress portion of a current egress path to the second point from the first point. Another data flow is routed via a next ingress portion of a next path to the first point from the second point. A controller is configured to receive policy data representing one or more policies that correspond to a particular traffic flow and information related to the traffic and traffic performance. The particular data flow is associated with a certain user identified by a destination prefix. A content flow analyzer performs passive analysis of specific elements of data content. An export flow analyzer and the content flow analyzer determine a set of relevant prefixes or a prefix list, that is associated with a specific user's policy, is sent as data representing such prefixes to an active detection process in the controller. The prefix list can be one or more lists or data structures configured to store data representing performance and usage characteristics and are designed to receive a query.

It is an object of the invention to provide an improved method for service named routing in a packet based communication network. It is also an object of the invention to provide an improved router for service named routing in a packet based communication network.

The object of the present invention is achieved by a method for service named routing in a packet based communication network, the communication network comprises at least two servers providing at least one service and a plurality of routers, wherein each router of the plurality of routers provides a routing table, a service performance table and an interest route table, each router stores in its routing table for each service of the at least one service at least one connection port associated with the at least one service, each router stores in its service performance table for each service of the at least one service service performance data associated with two or more connection ports of the router, a first router of the plurality of routers sends to two or more neighboring routers via two or more of its connection ports an interest packet associated with the at least one service comprising a service name indicator and a unique interest tag, a second router of the plurality of routers receives the interest packet via an incoming connection port, sends the interest packet via an outgoing connection port associated with the at least one service in its routing table and stores the interest tag of the received interest packet together with the incoming connection port and the outgoing connection port in its interest route table, a server of the at least two servers receives the interest packet, the server attaches data comprising load data of the at least one service to the interest packet and sends the interest packet back to the second router, the second router receives the interest packet, and the second router calculates service performance data based on the data attached to the interest packet, stores the service performance data in the service performance table of the second router, updates the routing table of the second router based on an evaluation of the service performance data stored in the service performance table of the second router and sends the interest packet via the incoming connection port as associated by the interest route table to the first router. The object of the present invention is also achieved by a router for service named routing in a packet based communication network comprising at least two servers providing at least one service and a plurality of routers, wherein the router comprises at least one storage unit storing a routing table, a service performance table which stores for each service of the at least one service service performance data associated with two or more connection ports of the router and an interest route table, a network interface comprising two or more connection ports and a control unit adapted to receive an interest packet, which was sent by another router of the plurality of routers, associated with the at least one service comprising a service name indicator and a unique interest tag via an incoming connection port, send the interest packet via an outgoing connection port associated with the at least one service in the routing table and store the interest tag of the received interest packet together with the incoming connection port and the outgoing connection port in the interest route table, to receive the interest packet comprising data, which comprises a load data of the at least one service, attached to the interest packet by a server of the at least two servers via the outgoing connection port associated with the interest tag stored in the interest route table, to calculate service performance data based on the data attached to the interest packet, store the service performance data in the service performance table and update the routing table based on an evaluation of the service performance data stored in the service performance table, and to send the interest packet via the incoming connection port as associated by the interest route table to the other router.

The present invention provides a surprisingly effective way to access and/or provide services, for instants to clients by servers. A service provided by a server may also comprise content provision. Embodiments according to the present invention provide to route on content identities than network addresses, i.e. the determination of the routing path is made based on content and/or service identities,

The invention provides a more efficient networking approach, since it reduces the number of indirections, and allows the incorporation of services like multicasting and QoS (QoS = Quality of Service) while ensuring secure delivery of content. The present invention provides CCN (CCN = Content Centric Networking). The NBR layer (NBR = name based routing) of these communication networks delivers the closest copy of a certain content item and/or service to the requesting client. Close in this case means shortest latency, which is usually also reflected by a minimized hop-count that the content has to be transmitted.

Embodiments of the invention are applicable to, preferably compute intensive, services, like transcoding of video and/or audio data, but not limited and are also suitable for content provision.

Embodiments of the present invention are similar to ACO techniques (ACO = Ant Colony Optimization) and may be based on ACO in combination with NBR to allow more accurate routing decisions in the routing layer. Additional information, such as load data of the service or available bandwidth on the routing path data, is gathered to make these decisions. In particular, separating this decision from the actual forwarding plane by modifying routing tables in the router may be achieved. Therefore, it is possible that the routing is still done in line speed. Such, the present invention is superior to today's IP based load-balancing systems and today's NBR layers.

Embodiments of the present invention overcome state of the art load balancing mechanisms, e.g. for cloud centralized implementations services, design limitations which are as follows:
a) lack of scalability (both in terms of users and number of services),
b) single point of failure,
c) large number of queries between load balancer and services for resource lookup and update queries,
d) 3 leads to high cost of communication between balancer and server,
   and/or
e) extra round trip time is needed for the redirection of requests, which is similar in Web based services, with a centralized request handler that uses algorithms like round-robin to forward a request to a particular service, wherein casting from a logical service URL to one among a pool of IP addresses is heavily used as, similarly, URL redirection used in other cases.

Embodiments of the present invention are focused on designing a new Internet architecture in order to solve problems of the current design while making it future-proof. In contrast to traditional IP, the present invention focuses on content rather than on establishing communication pipes between end-systems hosting that content. This reliance on names enables it to route to content and services without having to associate a location-dependent address to them. Additionally, embodiments of the present invention inherently can support multicast, anycast, caching and locating content and services without having to rely on DNS (DNS = Domain Name Service), which makes the present invention a viable alternative to the current methods of locating content and services. Therefore, embodiments of the present invention provide a SCN scheme (SCN = Service-Centric Networking) that leverages CCN to route interests to the best instance of a requested service.

In order to make knowledgeable decisions on service instance selection and routing, the dissemination of information about newly instantiated services, constantly changing node resources and service and content properties is imperative. These requirements are fulfilled by the embodiments of the present invention which make use of ACO concepts or concepts based on ACO to gather and disseminate information and enable thereby to make informed decisions on service selection and instantiation. Embodiments of the present invention may therefore be regarded as an implementation of SCN as a control layer over CCN to route interests to the right service. Preferably, the inventive scheme does not change the CCN layer functionality. The network nodes or routers can run the CCN routing protocol which is used to route requests to services and back.

Embodiments can furthermore advantageously provide following features:
i) routers can balance load in a distributed way, since the routing is service or named based,
ii) routing decisions, i.e. the evaluation and calculation of the service performance data, can be made depending on different metrics, taking into account requirements of a service or content,
iii) routing decisions, i.e. the evaluation and calculation of the service performance data, can be made independently from service requests, which allows the routers to forward requests in the fast path, i,e. by fast path controlling, and in line speed,
iv) caching and location independent names, i.e. service performance data and server location, can enable mobility,
v) multicasting can be provided, since content adaptation and/or services can be installed on an intermediate node or router in the communication network such that a single copy of content is sent from a content server to the service before being sent to multiple clients after adaptation, which can reduce overhead caused by transporting multiple copies of adapted content to different clients,
vi) optimal service selection (anycast) can be provided, since embodiments of the present invention can forward a request to the best service based on a metric, like closest service, lightly loaded service, etc.,
vii) since current NBR layers are using latency as the only metric for optimized content delivery, embodiments of the present invention can include additional metrics, such as bandwidth, service load, etc, which is an advantage over CCN,
vii) embodiments of the present invention may not require service lookup and resolution, since in contrast to traditional services, a service instantiation can result in a publish step where all the nodes in the communication network get notified about the service by means of an availability message, and furthermore, the absence of a resolution step because of name-based routing results in lower delays, and/or
viii) embodiments of the present invention can provide service data caching or service performance data caching, since routers can cache service content, and therefore, other clients requesting the same processed content can be sent the cached version of the content which can reduce the overhead of transporting popular content.

Further advantages are achieved by embodiments of the invention indicated by the dependent claims.

According to a preferred embodiment of the invention the method for service named routing the first router and/or the second router attaches, preferably by means of a control unit, timestamp data indicating the time of the arrival or forwarding of the interest packet to the interest packet. The first router and/or the second router calculates, preferably by means of the control unit, delay time data being part of the service performance data associated with interest packet by means of the interest tag in the service performance table based on the local time or reception time of the interest packet at the first router and/or second router, respectively and the respective timestamp data previously attached to the interest packet by the first router and/or second router, respectively. According to a preferred embodiment of the invention the method for service named routing the server and/or the second router , preferably by means of a control unit, attaches bandwidth data to the interest packet. The second router, preferably by means of its control unit, and/or the first router, preferably by means of a control unit, compares the bandwidth data stored in the interest packet with the local bandwidth data associated with the incoming and/or outgoing connection port and replacing the bandwidth data by the local bandwidth data in case that the local bandwidth is smaller than the bandwidth stored. The second router and/or the first router, preferably by means of the control unit, uses the local bandwidth data and for the bandwidth data stored in the interest packet to calculate the service performance data associated with interest packet by means of the interest tag in the service performance table.

It is possible, the routing data comprises a load data of the at least two servers, bandwidth data associated with the connection to the at least one service and delay time data associated with the connection to the at least one service, rating data associated with the connection to the at least one service, and probability data associated with the rating data.

Preferably, the first router and/or the second router, by means of a control unit replaces the correspondingly stored bandwidth data, the delay time data and the load data of the at least one server with the bandwidth data of the received interest packet.

It is possible that the probability associated with a service of the at least one service and with a connection port associated with the at least one service and/or with a neighboring router of the at least two servers and/or of a router of the plurality of routers is the associated rating divided by the sum of all ratings associated with the at least one service irrespective of the connection port.

According to a preferred embodiment of the invention the method for service named routing the first router and/or the second router, preferably by means of a control unit, reduces a result of the calculation of the service performance data calculation, preferably periodically every 1 minute to 10 minutes, by multiplication of a factor. The factor is preferably a number between 0 and 1. A suitable value of the factor can be equal to 0.9.

According to a preferred embodiment of the invention the method for service named routing the at least two servers, preferably by means of a control unit, send an availability message of the at least one service to neighboring routers of the plurality of routers. A router of the plurality of routers, preferably by means of a control unit, forwards the availability message to neighboring routers of the plurality of routers when the router receives the availability message.

Preferably, the router of the plurality of routers, preferably by means of the control unit, forwards the availability message to neighboring routers of the plurality of routers when the router receives the availability message the first time.

According to a preferred embodiment of the invention the method for service named routing each router, preferably by means of a control unit, restarts the method with the step of sending to two or more neighboring routers via two or more of its connection ports an interest packet associated with the at least one service comprising a service name indicator and a unique interest tag for a randomly selected service from at least one service periodically within a predefined time period.

According to a preferred embodiment of the invention the method for service named routing the second router, preferably by means of a control unit, checks whether there is a corresponding outgoing connection port listed in its interest rout table and/or routing table of the router for sending the interest packet via an outgoing connection port associated with the at least one service. In case there is no corresponding outgoing connection port listed then the second router, preferably by means of the control unit, starts the method with the step of sending, by the second router, to two or more neighboring routers via two or more of its connection ports an interest packet associated with the at least one service comprising a service name indicator and a unique interest tag.

According to a preferred embodiment of the invention the method for service named routing each router of the plurality or routers, preferably by means of a control unit, routes communication packets according to the routing table of the router by means of fast path controlling.

According to a preferred embodiment of the invention the router for service named routing the routing table is part of the fast path controlling.

It is possible that the two or more connection ports comprise at least one incoming connection port and at least one outgoing connection port for routing interest packets and/or communication packets by means of fast path controlling.

Preferably, one or more of the two or more connection ports act as or provide the functionality of an incoming connection port and an outgoing connection.

Control of the fast path layer resides above the named routing layer. These layers can be layers according to the Open Systems Interconnection model (OSI = Open Systems Interconnection). Preferably, the fast path resides at the second layer and/or third layer, i.e. data link layer and/or the network layer, respectively, of the OSI model.

According to a preferred embodiment of the invention the method for service named routing the first router, preferably by means of a control unit, receives the interest packet via the outgoing connection port associated with the interest tag stored in the interest route table of the first router. The first router, preferably by means of the control unit, calculates service performance data based on the data attached to the interest packet, stores the service performance data in the service performance table of the first router and updates the routing table of the first router based on an evaluation of the service performance data stored in the service performance table of the first router.

According to a preferred embodiment of the invention the method for service named routing the first router and/or the second router, preferably by means of a control unit, stores rating data associated with result of the calculation of the service performance data calculation in its service performance table being inversely proportional to the load data or load of the server and preferably being inversely proportional to delay time data or delay time and/or proportional to bandwidth data or bandwidth associated with the at least one service. The first router and/or the second router, preferably by means of the control unit, calculates probability data for each outgoing connection port associated with the at least one service based on the rating data. The first router and/or the second router, preferably by means of the control unit, updates the routing table by means of storing the at least one connection port associated with the at least one service having a maximum probability.

Preferably, each router, preferably by means of a control unit, stores in its routing table for each service of the at least one service at least one connection port associated with the at least one service and/or with a neighboring router of the at least two servers and/or of a router of the plurality of routers for routing data packets of each service of the at least one service via an associated connection port to the respective at least one service and/or the respective neighboring router of the at least two servers and/or of a router of the plurality of routers.

It is possible, that a neighboring router of the at least one server and/or of a router of the plurality of routers is connected to the at least two servers and/or to the router of the plurality of routers, respectively without having another router of the plurality of routers in between the connection from the neighboring router to the at least two servers and/or to the router of the plurality of routers, respectively.

Preferably, each router, preferably by means of a control unit, stores in its service performance table for each service of the at least one service and for each connection port associated with the at least two servers and/or with a neighboring router of the at least two servers and/or of a router of the plurality of routers routing data.

It is possible that the second router of the plurality of routers is a neighboring router of the first router of the plurality of routers.

Preferably, the incoming connection port is the connection port by which the interest packet was received. The outgoing connection port can be the connection port at which the interest packet is sent off.

It is possible that the incoming connection port is a connection port of the router at which the interest packet was received at the first time and the outgoing connection port is a connection port of the router at which the interest packet was sent off at the first time.

Preferably, the interest packet is named or called routing instillation packet. The interest packet can be named or called data packet while the interest packet is send back from the server to the first router.

It is possible that the at least one storage unit is a memory device or data base holding the routing table, the service performance table and/or the interest route table.

Preferably, the service performance data comprises one or more of the following routing specific data: the number of hops along one routing path of the interest data packet, the minimum of available bandwidth on the links along routing path of the interest data packet, administrative costs along one routing path of the interest data packet and a transit delay on the links along the path of the interest data packet. A link may be the connection between two neighboring routers of the plurality of routers.

These as well as further features and advantages of the invention will be better appreciated by reading the following detailed description of presently preferred exemplary embodiments taken with the accompanying drawing of:
- Figures 1a, 1b, 1c: show a packet based communication network comprising two servers providing at least one service and nine routers during the different method steps of the method for service named routing in accordance with the present invention.
- Figure 2: shows router for service named routing in accordance with the present invention.
- Figure 3a: shows a data structure of the interest packet while being routed from a first router towards a server providing the at least one service in accordance with the present invention.
- Figure 3b: shows a data structure of the interest packet while being routed backwards from the server providing the at least one service to a first router in accordance with the present invention.
- Figure 4a: shows a service performance table in accordance with the present invention.
- Figure 4b: shows a routing table in accordance with the present invention.

- Figure 4c: shows an interest route table in accordance with the present invention.

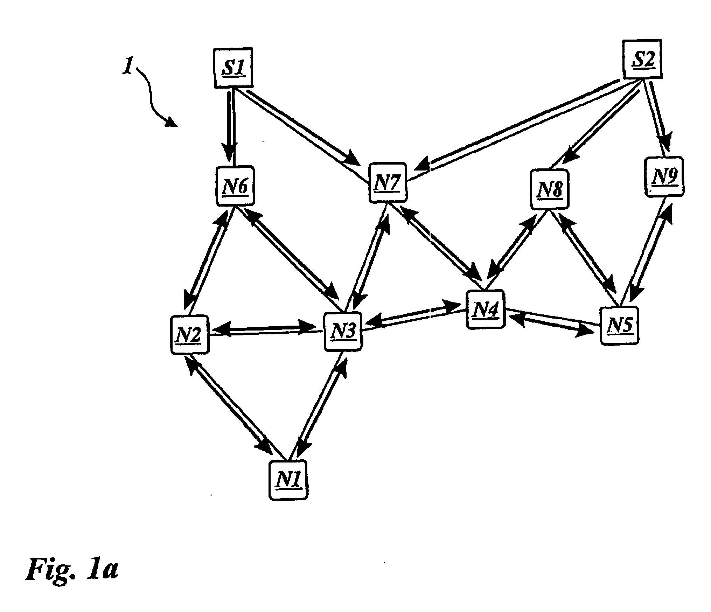

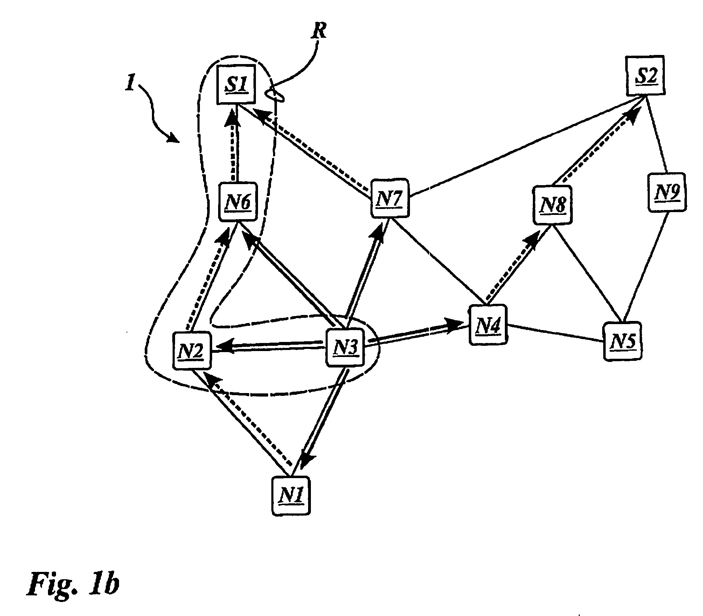

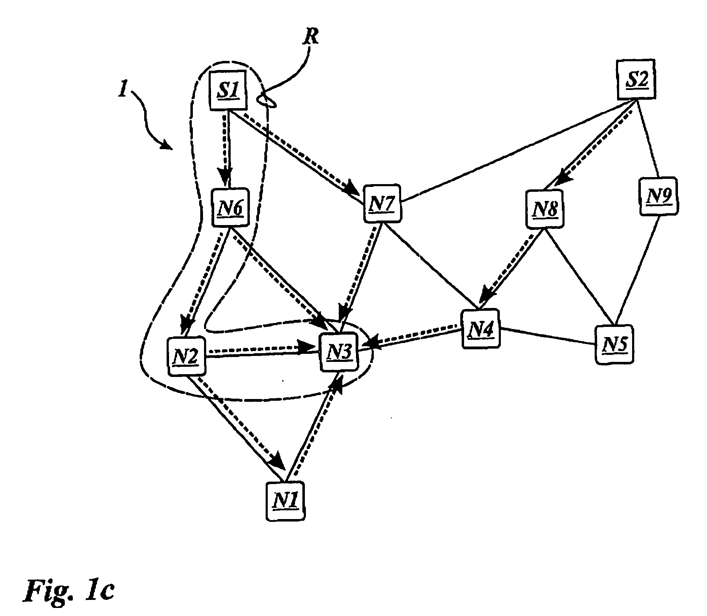

Figures 1a, 1b, 1c show a packet based communication network 1 comprising two servers S1, S2 providing at least one service and nine routers N1, ..., N9 during the different method steps of the method for service named routing in accordance with the present invention. These routers N1, ..., N9 are in accordance with the present invention, Direct connections between the routers N1, ..., N9 and/or servers S1, S2 are shown by thin lines indicating network links and/or communication links and routing directions or travel directions of interest, data and/or communication packets between the routers N1, ..., N9 and/or servers S1, S2 are shown by arrows. Direct connections between the routers N1, ..., N9 and/or servers S1, S2 are connections without having a further router in between. A neighboring router of the at least one server S1, S2 and/or of a router of the plurality of routers N1, ..., N9 is connected to the at least two servers S1, S2 and/or to the router of the plurality of routers N1, ..., N9, respectively without having another router of the plurality of routers N1, ..., N9 in between the connection from the neighboring router to the at least two servers S1, S2 and/or to the router of the plurality of routers N1, ..., N9, respectively.

Before describing further in detail the inventive method for service named routing the entities involved are described:

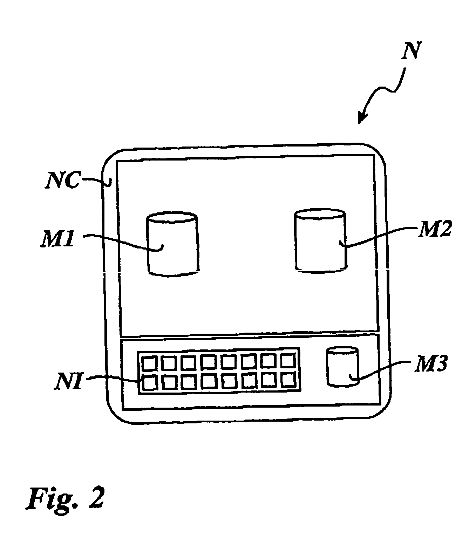

Figure 2 shows a router N for service named routing in accordance with the present invention. The router N is corresponding to the routers N1, ..., N9 shown in Figures 1a, 1b and 1c. However, the servers S1 and S2 can be routers of the communication network 1 and/or can provide in addition the functionality of the routers in accordance with the present invention. The router N comprises a control unit N, and three storage units M1, M2 and M3. The storage units M 1, M2, and M3 hold an interest rout table 7, a service performance table 5 and a routing table 6, respectively. It is alternatively possible that the three storage units are provided by a single storage unit. A storage unit is a memory device, like a random access memory or a hard disk, or a data base entity by means of software and/or hardware means. The router N comprises further a network interface NI providing two or more connection ports which can act as incoming as well as outgoing connection ports. The router N routes communication packets according to the routing table 6 of the router N by means of fast path controlling, the control unit NC and the network interface NI. The routing table 6 is part of the fast path controlling.

In order to provide the service named routing in the packet based communication network 1. The servers S1 and S2 can publish the service to the routers N1, ..., N9 by means of a respective availability message as depicted in Figure 1a. Therefore the servers S1 and S2 can send the availability message to their neighboring routers N6, N7 and N7, N8, N9, respectively, indicated by single arrows in Figure 1a. Preferably, only the first time a router receives the availability message the router forwards the availability messages to its neighboring routers, indicated by double arrows in Figure 1a. However, each router may perform at least one time the inventive method.

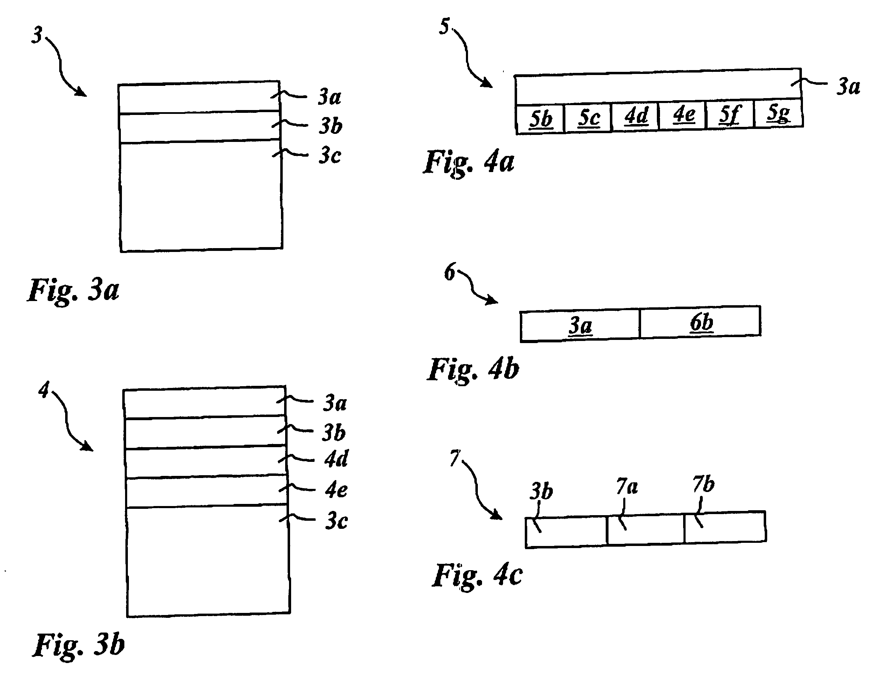

Each router N1, ..., N9 provides a routing table 6, a service performance table 5 and an interest route table 7. The structure of these tables is shown in the Figures 4a, 4b, and 4c as follows:
Figure 4a shows a service performance table 5 in accordance with the present invention. The service performance table 5 comprises for each service identified by a service name indicator 3a and for each connection port 5b of the respective router a load data 4d associated with the server of the at least two servers S1, S2 being reachable via the connection port 5b, a respective minimal bandwidth 4e of the routing path towards the server, a respective delay time 5c, a respective rating data 5f and a thereto associated probability 5g. However, it is also possible to use instead of these exemplary metrics, i.e. load of the server, bandwidth, and delay time one or more alternative metrics, e.g. the number of hops along the routing path or signal qualities like interference to noise ratios.
Figure 4b shows a routing table 6 in accordance with the present invention. The routing table 6 comprises for each service the service name indicator 3a and an associated connection port 6b.
Figure 4c shows an interest route table 7 in accordance with the present invention. The interest route table 7 comprises for each interest tag 3b an in incoming connection port 7a and an outgoing connection port 7b.

Each router N1, ..., N9 stores in its routing table 6 for each service 3a at least one connection port 6b associated with the service 3a.

Each router N1, ..., N9 stores in its service performance table 5 for each service of the at least one service service performance data associated with two or more connection ports of the router. The service performance data comprises for each service 3a and for each connection port 5b of the respective router the load data 4d associated with the server of the at least two servers S1, S2 being reachable via the connection port 5b, the respective minimal bandwidth 4e of the routing path towards the server, a respective delay time 5c, a respective rating data 5f and a thereto associated probability 5g.

A first router N3 sends to the neighboring routers N1, N2, N4, N6, N7 via its connection ports an interest packet associated with the service comprising a service name indicator 3a and a unique interest tag 3b as indicated in figure 1b by means of plain arrows.

Figure 3a shows the data structure 3 of the interest packet while being routed along the route R as shown in Figure 1b from a first router N3 towards the server S1 providing the at least one service. The interest packet comprises name indicator 3a and a unique interest tag 3b, and one or more timestamps, or timestamp data, 3c.

A second router N2 receives the interest packet via an incoming connection port, sends the interest packet via an outgoing connection port associated with the service 3a in its routing table 6 and stores the interest tag 3b of the received interest packet together with the incoming connection port and the outgoing connection port in its interest route table 7.

The server S1 receives via the route R - as indicated in Figure 1b by means of the plain arrow and the dotted arrows - the interest packet through the routers N3, N2, and N6. The route R is only to be understood as an example, other possible routes are indicated in the figures 1b and 1c by the dotted arrows.

The server S1 attaches data comprising load data of the at least one service to the interest packet as well as available bandwidth data and sends the interest packet back to the second router N2 via the routing path R as shown in Figure 1c.

Figure 3b shows a data structure 4 of the interest packet while being routed backwards from the server S1 providing the service to the first router N3. The interest packet comprises the service name indicator 3a and the unique interest tag 3b, and the timestamps attached by the routers N3, N2 and N6 as timestamp data 3c, and furthermore the load data 4d of the service at the server S1, and the bandwidth data 4e.

The second router N2 receives the interest packet and calculates service performance data based on the data attached to the interest packet. The second router N2 stores the service performance data in its service performance table 5 and updates its routing table 6 based on an evaluation of the service performance data stored in its service performance table 5 and sends the interest packet via the incoming connection port as associated by the interest route table 7 back along the route R to the first router N3. In other words, the interest packet is sent by along exactly the same routing path which it had marked by "breadcrumbs" on the route to the server S1.

The first router N3 receives the interest packet via the outgoing connection port associated with the interest tag 3b stored in its interest route table and calculates service performance data based on the data attached to the interest packet. The first router N3 stores the service performance data in its service performance table 5 and updates its routing table 6 based on an evaluation of the service performance data stored in its service performance table 5.

In more detail with respect to the attached data and the calculation and evaluation of the service performance data is as follows;

The second router N2, the first router N3 and the router N6 - in the present example - attach their respective timestamp data indicating the time of the arrival or forwarding of the interest packet at the second router N2, the first router N3 and the router N6, respectively. The second router N2, the first router N3 and the router N6 calculate delay time data being part of the service performance data associated with interest packet by means of the interest tag 3b in their service performance table 5 based on the respective local time or reception time of the interest packet at the second router N2, the first router N3 and the router N6, respectively and the respective timestamp data previously attached to the interest packet by the second router N2, the first router N3 and the router N6, respectively.

Furthermore, the second router N2, and the server S1, and the router N6 attach their local bandwidth data, which is preferably associated with the connection and/or connection port, to the interest packet in case that there is no bandwidth data attached or the attached bandwidth data corresponds to bandwidth which is larger than the their respective local bandwidth. This is achieved by comparing the bandwidth data stored in the interest packet with the local bandwidth data associated with the incoming and/or outgoing connection port and replacing the bandwidth data in the interest packet by the local bandwidth data in case that the local bandwidth is smaller than the bandwidth stored. The service performance table 5 will correspondingly be updated in that case.

The second router N2, the first router N3 and the router N6 use the minimum of the local bandwidth and the bandwidth stored in the interest packet to calculate the service performance data associated with interest packet by means of the interest tag 3b in the service performance table 5.

The second router N2, the first router N3 and the router N6 store rating data associated with result of the calculation of the service performance data calculation in their service performance table 5. The rating data is inversely proportional to the load data of the server S1, inversely proportional to delay time data and proportional to bandwidth data associated with the service. The second router N2, the first router N3 and the router N6 calculate probability data for each outgoing connection port associated with the service based on the rating data. The probability associated with the service and with the connection port associated with the service is the associated rating divided by the sum of all ratings associated with the at least one service irrespective of the connection port. The second router N2, the first router N3 and the router N6 update their routing table 6 by means of storing the at least one connection port associated with the at least one service having a maximum probability.

Each router reduces a result of its calculation of the service performance data calculation, preferably periodically every 1 minute to 10 minutes, by multiplication of a factor, wherein the factor is a number between 0 and 1, being preferably equal to 0.9.

Furthermore, each router N1, ..., N9 restarts the method with the step of sending to two or more neighboring routers via its connection ports NI an interest packet for a randomly selected service from at least one service periodically with a predefined time period. Thereby the routing can be held optimal and up-to-date.

A router of the plurality of routers N1, ..., N9 checks whether there is a corresponding outgoing connection port listed in its routing table 6 or interest route table 7 of the router for sending the interest packet via an outgoing connection port. In case there is no corresponding outgoing connection port listed then the router starts the method with the step of sending to its neighboring routers via its connection ports an interest packet associated with the at least one service comprising the service name indicator 3a and a unique interest tag 3b.

## Claims

1. Method of service named routing in a packet based communication network (1), the communication network (1) comprises at least two servers (S1, S2) providing at least one service and a plurality of routers (N1, ..., N9),
the method comprises the steps of:
providing, by each router of the plurality of routers (N1, ..., N9), a routing table (6), a service performance table (5) and an interest route table (7), storing, by each router (N1, ..., N9), in its routing table (6) for each service of the at least one service at least one connection port associated with the at least one service, and
storing, by each router (N1, ..., N9), in its service performance table (5) for each service of the at least one service service performance data associated with two or more connection ports (NI) of the router, and
is **characterized in that**
the method comprises the steps of:
sending, by a first router (N3) of the plurality of routers (N1, ....., N9), to two or more neighboring routers (N1, N2, N4, N6, N7) via two or more of its connection ports (NI) an interest packet associated with the at least one service comprising a service name indicator (3a) and a unique interest tag (3b),
receiving, by a second router (N2) of the plurality of routers (N1, ..., N9), the interest packet via an incoming connection port, sending the interest packet via an outgoing connection port associated with the at least one service in its routing table (6) and storing the interest tag (3b) of the received interest packet together with the incoming connection port and the outgoing connection port in its interest route table (7), receiving, by a server (S1) of the at least two servers (S1, S2), the interest packet,
attaching, by the server (S1), data comprising load data of the at least one service to the interest packet and sending the interest packet back to the second router (N2),
receiving, by the second router (N2), the interest packet, and calculating, by the second router (N2), service performance data based on the data attached to the interest packet, storing the service performance data in the service performance table (5) of the second router (N2), updating the routing table (6) of the second router (N2) based on an evaluation of the service performance data stored in the service performance table (5) of the second router (N2) and sending the interest packet via the incoming connection port as associated by the interest route table (7) to the first router (N3).

2. The method of service named routing according to claim 1,
wherein the method comprises the steps of:
attaching, by the first router (N3) and/or by the second router (N2), timestamp data indicating the time of the arrival or forwarding of the interest packet to the interest packet, and
calculating, by the first router (N3) and/or by the second router (N2), delay time data being part of the service performance data associated with interest packet by means of the interest tag (3b) in the service performance table (5) based on the local time or reception time of the interest packet at the first router and/or second router (N2), respectively and the respective timestamp data previously attached to the interest packet by the first router and/or second router (N2), respectively.

3. The method of service named routing according to claim 1,
wherein the method comprises the steps of:
attaching, by the server (S1) and/or by the second router (N2), bandwidth data to the interest packet,
comparing, by second router (N2) and/or by the first router (N3), the bandwidth data stored in the interest packet with the local bandwidth data associated with the incoming and/or outgoing connection port and
replacing the bandwidth data by the local bandwidth data in case that the local bandwidth is smaller than the bandwidth stored, and
using, by the second router (N2) and/or by the first router (N3), the local bandwidth data and for the bandwidth data stored in the interest packet to calculate the service performance data associated with interest packet by means of the interest tag (3b) in the service performance table (5).

4. The method of service named routing according to claim 1,
wherein the method comprises the steps of:
reducing, by the first router (N3) and/or by the second router (N2), a result of the calculation of the service performance data calculation,
preferably periodically every 1 minute to 10 minutes, by multiplication of a factor, wherein the factor is a number between 0 and 1, being preferably equal to 0.9.

5. The method of service named routing according to claim 1,
wherein the method comprises the steps of:
sending, by the at least two servers (S1, S2), an availability message of the at least one service to neighboring routers of the plurality of routers (N1, ..., N9) and
forwarding, by a router of the plurality of routers (N1, ..., N9), the availability message to neighboring routers of the plurality of routers (N1, ..., N9) when the router receives the availability message.

6. The method of service named routing according to claim 1,
wherein the method comprises the steps of:
restarting, by each router, the method with the step of sending to two or more neighboring routers (N1, N2, N4, N6, N7) via two or more of its connection ports (NI) an interest packet associated with the at least one service comprising a service name indicator (3a) and a unique interest tag (3b) for a randomly selected service from at least one service periodically within a predefined time period.

7. The method of service named routing according to claim 1,
wherein the method comprises the step of:
checking, by the second router (N2), whether there is a corresponding outgoing connection port listed in its interest route table (7) and/or routing table (6) of the router for sending the interest packet via an outgoing connection port associated with the at least one service, in case there is no corresponding outgoing connection port listed then starting, by the second router (N2), the method with the step of sending, by the second router (N2), to two or more neighboring routers (N1, N3, N4, N6, N7) via two or more of its connection ports (NI) an interest packet associated with the at least one service comprising a service name indicator (3a) and a unique interest tag (3b).

8. The method of service named routing according to claim 1,
wherein the method comprises the step of:
routing, by each router of the plurality or routers (N1, ..., N9), communication packets according to the routing table (6) of the router by means of fast path controlling.

9. The method of service named routing according to claim 1,
wherein the method comprises the steps of:
receiving, by the first router (N3), the interest packet via the outgoing connection port associated with the interest tag (3b) stored in the interest route table (7) of the first router (N3), and
calculating, by the first router (N3), service performance data based on the data attached to the interest packet, storing the service performance data in the service performance table (5) of the first router (N3) and
updating the routing table (6) of the first router (N3) based on an evaluation of the service performance data stored in the service performance table (5) of the first router (N3).

10. The method of service named routing according to claim 1,
wherein the method comprises the steps of:
storing, by the first router (N3) and/or by the second router (N2), rating data associated with result of the calculation of the service performance data calculation in its service performance table (5) being inversely proportional to the load data of the server (S1) and preferably being inversely proportional to delay time data and/or proportional to bandwidth data associated with the at least one service,
calculating, by the first router (N3) and/or by the second router (N2), probability data for each outgoing connection port associated with the at least one service based on the rating data, and
updating, by the first router (N3) and/or by the second router (N2), the routing table (6) by means of storing the at least one connection port associated with the at least one service having a maximum probability.

11. Router (N, N2) for service named routing in a packet based communication network (1) comprising at least two servers (S1, S2) providing at least one service and a plurality of routers (N1, ..., N9), wherein the router (N, N2, N3) comprises at least one storage unit (M1, M2, M3) storing a routing table (6), a service performance table (5) which stores for each service of the at least one service service performance data associated with two or more connection ports (NI) of the router and an interest route table (7), a network interface (NI) comprising two or more connection ports and a control unit (NC),
**characterized in that**
the control unit (NC) is adapted to receive an interest packet, which was sent by another router (N3) of the plurality of routers (N1, ..., N9), associated with the at least one service comprising a service name indicator (3a) and a unique interest tag (3b) via an incoming connection port, send the interest packet via an outgoing connection port associated with the at least one service in the routing table (6) and store the interest tag (3b) of the received interest packet together with the incoming connection port and the outgoing connection port in the interest route table (7), to receive the interest packet comprising data, which comprises a load data of the at least one service, attached to the interest packet by the a server (S1) of the at least two servers (S1, S2) via the outgoing connection port associated with the interest tag (3b) stored in the interest route table (7), to calculate service performance data based on the data attached to the interest packet, store the service performance data in the service performance table (5) and update the routing table (6) based on an evaluation of the service performance data stored in the service performance table (5), and to send the interest packet via the incoming connection port as associated by the interest route table (7) to the other router (N3).

12. The router (N, N2) for service named routing according to claim 11, wherein the routing table (6) is part of the fast path controlling.

## Patentansprüche

1. Serviceverfahren mit der Bezeichnung Routing in einem paketbasierten Kommunikationsnetzwerk (1), wobei das Kommunikationsnetzwerk (1) mindestens zwei Server (S1, S2), die zumindest einen Dienst leisten, und eine Vielzahl von Routern (N1, ..., N9) umfasst;
wobei das Verfahren die folgenden Schritte umfasst:
durch jeden Router aus der Vielzahl von Routern (N1, ..., N9) Bereitstellung einer Routingtabelle (6), einer Dienstperformancetabelle (5) und einer Interest-Routingtabelle (7), durch jeden Router (N1, ..., N9) in seiner Routingtabelle (6) für jeden Service des mindestens einen Services mindestens einen Verbindungsport speichernd, der dem mindestens einen Service zugeordnet ist, und
Speichern von einem oder mehreren Anschlussports (NI) des Routers zugeordneten Dienstperformancedaten durch jeden Router (N1, ..., N9), in dessen Dienstperformancetabelle (5) für jeden Service des mindestens einen Services; und
**dadurch gekennzeichnet ist, dass**
das Verfahren die folgenden Schritte umfasst:
Senden eines Interest-Pakets, das dem mindestens einen, einen Service-Name-Indikator (3a) umfassenden Service und einem eindeutigen Interest-Tag (3b) zugeordnet ist, durch einen ersten Router (N3) der Vielzahl von Routern (N1, ..., N9) an einen oder mehrere benachbarte Router (N1, N2, N4, N6, N7) über zwei oder mehrere seiner Anschlussports (NI),
Empfangen des Interest-Pakets durch einen zweiten Router (N2) der Vielzahl von Routern (N1, ..., N9) über einen Eingangs-Anschlussport, Senden des Interest-Pakets über einen Ausgangs-Anschlussport, der dem mindestens einen Service in seiner Routingtabelle (6) zugeordnet ist, und Speichern des Interest-Tags (3b) des empfangenen Interest-Pakets zusammen mit dem Eingangs-Anschlussport und dem Ausgangs-Anschlussport in seiner Interest-Routingtabelle (7),
Empfangen des Interest-Pakets durch einen Server (S1) von mindestens zwei Servern (S1, S2),
Anhängen von Daten durch den Server (S1), Lastdaten des mindestens einen Dienstes an das Interest-Paket umfassend, und Zurücksenden des Interest-Pakets an den zweiten Router (N2),
Empfangen des Interest-Pakets durch den zweiten Router (N2) und auf der Grundlage der an das Interest-Paket angehängten Daten das Berechnen der Dienstperformancedaten durch den zweiten Router (N2), Speichern der Dienstperformancedaten in der Dienstperformancetabelle (5) des zweiten Routers (N2), auf der Grundlagen einer Bewertung der in der Dienstperformancetabelle (5) des zweiten Routers (N2) gespeicherten Dienstperformancedaten die Aktualisierung der Routingtabelle (6) des zweiten Routers (N2) und gemäß der Zuordnung durch die Interest-Routingtabelle (7) das Senden des Interest-Pakets über den Eingangs-Anschlussport an den ersten Router (N3).

2. Serviceverfahren mit der Bezeichnung Routing nach Anspruch 1,
wobei das Verfahren folgende Schritte umfasst:
durch den ersten Router (N3) und/oder den zweiten Router (N2) das Anhängen von Zeitstempeldaten, dem Interest-Paket den Zeitpunkt des Eingangs oder der Weiterleitung des Interest-Pakets angebend, und
Berechnen der zu den Dienstperformancedaten gehörenden Verzögerungszeitdaten durch den ersten Router (N3) und/oder den zweiten Router (N2), wobei die Dienstperformancedaten dem Interest-Paket anhand des Interest-Tags (3b) in der Dienstperformancetabelle (5) zugeordnet sind, auf der Grundlage der Ortszeit oder Empfangszeit des Interest-Pakets beim ersten Router bzw. beim zweiten Router (N2), wobei die entsprechenden Zeitstempeldaten zuvor vom ersten Router bzw. vom zweiten Router (N2) an das Interest-Paket angehängt wurden.

3. Serviceverfahren mit der Bezeichnung Routing nach Anspruch 1,
wobei das Verfahren folgende Schritte umfasst:
Anhängen von Bandbreitedaten an das Interest-Paket durch den Server (S1) und/oder durch den zweiten Router (N2),
durch den zweiten Router (N2) und/oder den ersten Router (N3) das Vergleichen der im Interest-Paket gespeicherten Bandbreitedaten mit den dem Eingangs- und/oder Ausgangs-Anschlussport zugeordneten, lokalen Bandbreitedaten und Ersetzen der Bandbreitedaten durch die lokalen Bandbreitedaten in dem Fall, dass die lokale Bandbreite geringer ist als die gespeicherte Bandbreite, und
Benutzen durch den zweiten Router (N2) und/oder den ersten Router (N3) der lokalen Bandbreitedaten und der im Interest-Paket gespeicherten Bandbreitedaten zur Berechnung der dem Interest-Paket durch den Interest-Tag (3b) in der Dienstperformancetabelle (5) zugeordneten Dienstperformancedaten.

4. Serviceverfahren mit der Bezeichnung Routing nach Anspruch 1,
wobei das Verfahren folgende Schritte umfasst:
Reduzieren durch den ersten Router (N3) und/oder den zweiten Router (N2) eines Resultats der Berechnung der Dienstperformancedaten, vorzugsweise regelmäßig alle 1 bis 10 Minuten, durch das Multiplizieren eines Faktors, wobei der Faktor eine Zahl zwischen 0 und 1 und vorzugsweise gleich 0,9 ist.

5. Serviceverfahren mit der Bezeichnung Routing nach Anspruch 1,
wobei das Verfahren folgende Schritte umfasst:
Senden einer Verfügbarkeitsnachricht mindestens eines Dienstes zu benachbarten Routern aus der Vielzahl von Routern (N1, ..., N9) durch die mindestens zwei Server (S1, S2), und
Weiterleiten der Verfügbarkeitsnachricht an benachbarte Router aus der Vielzahl von Routern (N1, ..., N9) durch einen Router aus der Vielzahl von Routern (N1, ..., N9), wenn der Router die Verfügbarkeitsnachricht erhält.

6. Serviceverfahren mit der Bezeichnung Routing nach Anspruch 1,
wobei das Verfahren folgende Schritte umfasst:
Neustart der Methode durch jeden Router, den Schritt umfassend, an zwei oder mehr benachbarte Router (N1, N2, N4, N6, N7) über zwei oder mehr seiner Anschlussports (NI) ein Interest-Paket zu senden, das mindestens einem Dienst zugeordnet ist, der einen Service-Namen-Indikator (3a) und einen eindeutigen Interest-Tag (3b) für einen nach dem Zufallsprinzip aus mindestens einem Dienst ausgewählten Dienst umfasst, was regelmäßig innerhalb eines vorab festgelegten Zeitraums erfolgt.

7. Serviceverfahren mit der Bezeichnung Routing nach Anspruch 1,
wobei das Verfahren folgenden Schritt umfasst:
Durch den zweiten Router (N2) prüfen, ob in der Interest-Routingtabelle (7) und/oder der Routingtabelle (6) des Routers für das Senden des Interest-Pakets über den mindestens einem Dienst zugeordneten Ausgangs-Anschlussport ein zugehöriger Ausgangs-Anschlussport aufgeführt ist, und wenn kein zugehöriger Ausgangs-Anschlussport aufgeführt ist, das Starten des Verfahrens durch den zweiten Router (N2) mit dem Schritt des Sendens eines Interest-Pakets, das dem mindestens einen Dienst zugeordnet ist sowie einen Service-Name-Indikator (3a) und einen eindeutigen Interest-Tag (3b) umfasst, durch den zweiten Router (N2) an zwei oder mehrere benachbarte Router (N1, N2, N4, N6, N7) über zwei oder mehr seiner Anschlussports (NI).

8. Serviceverfahren mit der Bezeichnung Routing nach Anspruch 1,
wobei das Verfahren folgenden Schritt umfasst:
Routen von Kommunikationspaketen gemäß der Routingtabelle (6) des Routers durch jeden Router aus der Vielzahl von Routern (N1, ..., N9) mittels FastPath-Steuerung.

9. Serviceverfahren mit der Bezeichnung Routing nach Anspruch 1, wobei das Verfahren folgende Schritte umfasst:
Empfangen des Interest-Pakets durch den ersten Router (N3) über den Ausgangs-Anschlussport, der dem Interest-Tag (3b) zugeordnet ist, der in der Interest-Routingtabelle (7) des ersten Routers (N3) gespeichert ist, und
auf der Grundlage der an das Interest-Paket angehängten Daten das Berechnen der Dienstperformancedaten durch den ersten Router (N3), Speichern der Dienstperformancedaten in der Dienstperformancetabelle (5) des ersten Routers (N3), und auf der Grundlagen einer Bewertung der in der Dienstperformancetabelle (5) des ersten Routers (N3) gespeicherten Dienstperformancedaten die Aktualisierung der Routingtabelle (6) des ersten Routers (N3).

10. Serviceverfahren mit der Bezeichnung Routing nach Anspruch 1, wobei das Verfahren folgende Schritte umfasst:
durch den ersten Router (N3) und/oder den zweiten Router (N2) das Speichern der Ratingdaten, die dem Ergebnis der Berechnung der Dienstperformancedaten in der entsprechenden Dienstperformancetabelle (5) zugeordnet sind, wobei diese umgekehrt proportional zu den Lastdaten des Servers (S1) und vorzugsweise umgekehrt proportional zu den Verzögerungszeitdaten und/oder proportional zu den Bandbreitedaten sind, die dem mindestens einen Dienst zugeordnet sind,
durch den ersten Router (N3) und/oder den zweiten Router (N2) das auf den Ratingdaten basierende Berechnen von Wahrscheinlichkeitsdaten für jeden Ausgangs-Anschlussport, der dem mindestens einen Dienst zugeordnet ist, und
das Aktualisieren der Routingtabelle (6) durch den ersten Router (N3) und/oder den zweiten Router (N2) anhand des Speicherns des mindestens einen Anschlussports, der dem mindestens einen Dienst zugewiesen ist, der über eine maximale Wahrscheinlichkeit verfügt.

11. Router (N, N2) für einen Service mit der Bezeichnung Routing in einem paketbasierten Kommunikationsnetzwerk (1), wobei das Kommunikationsnetzwerk mindestens zwei Server (S1, S2), die zumindest einen Dienst leisten, und eine Vielzahl von Routern (N1, ..., N9) umfasst, wobei der Router (N, N2, N3) mindestens eine eine Routingtabelle (6) speichernde Speichereinheit (M1, M2, M3), eine Dienstperformancetabelle (5), die für jeden Service von mindestens einem Service die Dienstperformancedaten speichert, die zwei oder mehr Anschlussports (NI) des Routers und einer Interest-Routingtabelle (7) zugeordnet sind, und eine Netzwerkschnittstelle (NI) umfasst, die ihrerseits zwei oder mehr Anschlussports und eine Steuereinheit (NC) umfasst,
**dadurch gekennzeichnet, dass**
die Steuereinheit (NC) ausgelegt ist für das Empfangen eines Interest-Pakets, das von einem anderen Router (N3) einer Vielzahl von Routern (N1, ..., N9) gesendet wurde, der über den Eingangs-Anschlussport dem mindestens einen Dienst zugeordnet ist, der einen Service-Name-Indikator (3a) und einen eindeutigen Interest-Tag (3b) umfasst, das Senden des Interest-Pakets über einen Ausgangs-Anschlussport, der dem mindestens einen Service aus der Routingtabelle (6) zugeordnet ist, und das Speichern des Interest-Tags (3b) des erhaltenen Interest-Pakets zusammen mit dem Eingangs-Anschlussport und dem Ausgangs-Anschlussport in der Interest-Routingtabelle (7), für das Empfangen der das Interest-Paket enthaltenden Daten, welches Lastdaten zu mindestens einem Dienst enthält und das über den Ausgangs-Anschlussport, der dem in der Interest-Routingtabelle (7) gespeicherten Interest-Tag (3b) zugeordnet ist, durch den einen Server (S1) von mindestens zwei Servern (S1, S2) an das Interest-Paket angehängt ist, für das Berechnen der Dienstperformancedaten auf der Grundlage der an das Interest-Paket angehängten Daten, das Speichern der Dienstperformancedaten in der Dienstperformancetabelle (5) und das Aktualisieren der Routingtabelle (6) auf der Grundlage einer Bewertung der in der Dienstperformancetabelle (5) gespeicherten Dienstperformancedaten, und für das Senden des Interest-Pakets an den anderen Router (N3), was über den Eingangs-Anschlussport erfolgt, der dazu von der Interest-Routingtabelle (7) zugewiesen wurde.

12. Der Router (N, N2) für einen Service mit der Bezeichnung Routing, nach Anspruch 11, wobei die Routingtabelle (6) Teil der FastPath-Steuerung ist.

## Revendications

1. Procédé de routage en fonction du service dans un réseau de communication à commutation de paquets (1), le réseau de communication (1) comprenant au moins deux serveurs (S1, S2) fournissant au moins un service et une pluralité de routeurs (N 1, ... , N9),
le procédé comprenant les étapes suivantes :
fournir, par chaque routeur de la pluralité de routeurs (N1, ..., N9), une table de routage (6), une table de performance de service (5) et une table de route d'intérêt (7),
stocker, par chaque routeur (N1, ..., N9), dans sa table de routage (6) pour chaque service de l'au moins un service, au moins un port de connexion associé à l'au moins un service, et
stocker, par chaque routeur (N1, ..., N9), dans sa table de performance de service (5) pour chaque service de l'au moins un service, des données de performance de service associées à deux ports de connexion (NI) ou plus du routeur, et
**caractérisé en ce que**
le procédé comprenant les étapes suivantes :
envoyer, par un premier routeur (N3) de la pluralité de routeurs (N1, ..., N9), à deux routeurs voisins (N1, N2, N4, N6, N7) ou plus par le biais de deux de ses ports de connexion (NI) ou plus, un paquet d'intérêt associé audit service comprenant un indicateur de nom de service (3a) et une étiquette d'intérêt unique (3b),
recevoir, par un second routeur (N2) de la pluralité de routeurs (N1, ..., N9), le paquet d'intérêt par le biais d'un port de connexion entrant, envoyer le paquet d'intérêt par le biais d'un port de connexion sortant associé à l'au moins un service dans sa table de routage (6) et stocker l'étiquette d'intérêt (3b) du paquet d'intérêt reçu ainsi que le port de connexion entrant et le port de connexion sortant dans sa table de route d'intérêt (7),
recevoir, par un serveur (S1), des au moins deux serveurs (S1, S2), le paquet d'intérêt,
joindre, par le serveur (S1), des données comprenant les données de charge de l'au moins un service au paquet d'intérêt et renvoyer le paquet d'intérêt au second routeur (N2),
recevoir, par le second routeur (N2), le paquet d'intérêt, et calculer, par le second routeur (N2), les données de performance de service sur la base des données jointes au paquet d'intérêt, stocker les données de performance de service dans la table de performance de service (5) du second routeur (N2), mettre à jour la table de routage (6) du second routeur (N2) sur la base d'une évaluation des données de performance de service stockées dans la table de performance de service (5) du second routeur (N2) et envoyer le paquet d'intérêt par le biais du port de connexion entrant associé par la table de route d'intérêt (7) au premier routeur (N3).

2. Procédé de routage en fonction du service selon la revendication 1,
le procédé comprenant les étapes suivantes :
joindre, par le premier routeur (N3) et/ou par le second routeur (N2), des données d'estampille temporelle indiquant l'heure d'arrivée ou de transfert du paquet d'intérêt au paquet d'intérêt, et
calculer, par le premier routeur (N3) et/ou par le second routeur (N2), des données de temps de retard faisant partie des données de performance de service associées au paquet d'intérêt au moyen de l'étiquette d'intérêt (3b) dans la table de performance de service (5) sur la base de l'heure locale ou de l'heure de réception du paquet d'intérêt sur le premier routeur et/ou le second routeur (N2), respectivement, et des données d'estampille temporelle respectives précédemment jointes au paquet d'intérêt par le premier routeur et/ou le second routeur (N2), respectivement.

3. Procédé de routage en fonction du service selon la revendication 1,
le procédé comprenant les étapes suivantes :
joindre, par le serveur (S1) et/ou par le second routeur (N2), des données de bande passante au paquet d'intérêt,
comparer, par le second routeur (N2) et/ou par le premier routeur (N3), les données de bande passante stockées dans le paquet d'intérêt avec les données de bande passante locale associées au port de connexion entrant et/ou sortant et remplacer les données de bande passante par les données de bande passante locale au cas où la bande passante locale est inférieure à la bande passante stockée, et
utiliser, par le second routeur (N2) et/ou par le premier routeur (N3), les données de bande passante locale et, pour les données de bande passante stockées dans le paquet d'intérêt, calculer les données de performance de service associées au paquet d'intérêt au moyen de l'étiquette d'intérêt (3b) dans la table de performance de service (5).

4. Procédé de routage en fonction du service selon la revendication 1,
le procédé comprenant les étapes suivantes :
réduire, par le premier routeur (N3) et/ou par le second routeur (N2), un résultat du calcul des données de performance de service, de préférence périodiquement toutes les 1 minute à 10 minutes, par la multiplication d'un facteur, le facteur étant un nombre compris entre 0 et 1, de préférence égal à 0,9.

5. Procédé de routage en fonction du service selon la revendication 1,
le procédé comprenant les étapes suivantes :
envoyer, par les au moins deux serveurs (S1, S2), un message de disponibilité de l'au moins un service aux routeurs voisins de la pluralité de routeurs (N1, ..., N9) et
transférer, par un routeur de la pluralité de routeurs (N1, ..., N9), le message de disponibilité aux routeurs voisins de la pluralité de routeurs (N1, ..., N9) lorsque le routeur reçoit le message de disponibilité.

6. Procédé de routage en fonction du service selon la revendication 1,
le procédé comprenant les étapes suivantes :
redémarrer, par chaque routeur, le procédé par l'étape d'envoi à deux routeurs voisins (N1, N2, N4, N6, N7) ou plus par le biais de deux ou plus de ses ports de connexion (NI) un paquet d'intérêt associé audit service comprenant un indicateur de nom de service (3a) et une étiquette d'intérêt unique (3b) pour un service sélectionné de manière aléatoire parmi au moins un service, périodiquement pendant une période temporelle prédéfinie.

7. Procédé de routage en fonction du service selon la revendication 1,
le procédé comprenant les étapes suivantes :
vérifier, par le second routeur (N2), s'il existe un port de connexion sortant correspondant listé dans la table de route d'intérêt (7) et/ou la table de routage (6) du routeur afin d'envoyer le paquet d'intérêt par le biais d'un port de connexion sortant associé à l'au moins un service, au cas où il n'existe pas de port de connexion sortant correspondant listé, alors démarrer, par le second routeur (N2), le procédé par l'étape d'envoi, par le second routeur (N2) à deux routeurs voisins (N1, N3, N4, N6, N7) ou plus par le biais de deux ou plus de ses ports de connexion (NI) un paquet d'intérêt associé à l'au moins un service comprenant un indicateur de nom de service (3a) et une étiquette d'intérêt unique (3b).

8. Procédé de routage en fonction du service selon la revendication 1,
le procédé comprenant les étapes suivantes :
acheminer, par chaque routeur de la pluralité de routeurs (N1, ..., N9) les paquets de communication conformément à la table de routage (6) du routeur au moyen d'une commande d'acheminement rapide.

9. Procédé de routage en fonction du service selon la revendication 1,
le procédé comprenant les étapes suivantes :
recevoir, par le premier routeur (N3), le paquet d'intérêt par le biais du port de connexion sortant associé à l'étiquette d'intérêt (3b) stockée dans la table de route d'intérêt (7) du premier routeur (N3), et
calculer, par le premier routeur (N3), les données de performance de service sur la base des données jointes au paquet d'intérêt, stocker les données de performance de service dans la table de performance de service (5) du premier routeur (N3) et mettre à jour la table de routage (6) du premier routeur (N3) sur la base d'une évaluation des données de performance de service stockées dans la table de performance de service (5) du premier routeur (N3).

10. Procédé de routage en fonction du service selon la revendication 1,
le procédé comprenant les étapes suivantes :
stocker, par le premier routeur (N3) et/ou par le second routeur (N2), des données de classement associées au résultat du calcul des données de performance de service dans sa table de performance de service (5) comme étant inversement proportionnelles aux données de charge du serveur (S1) et de préférence inversement proportionnelles aux données de temps de retard et/ou proportionnelles aux données de bande passante associées à l'au moins un service,
calculer, par le premier routeur (N3) et/ou par le second routeur (N2), des données de probabilité pour chaque port de connexion sortant associé audit service sur la base des données de classement, et
mettre à jour, par le premier routeur (N3) et/ou par le second routeur (N2), la table de routage (6) au moyen du stockage de l'au moins un port de connexion associé à l'au moins un service ayant une probabilité maximale.

11. Routeur (N, N2) pour routage en fonction du service dans un réseau de communication à commutation de paquets (1), comprenant au moins deux serveurs (S1, S2) fournissant au moins un service et une pluralité de routeurs (N1, ..., N9), dans lequel le routeur (N, N2, N3) comprend au moins une unité de stockage (M1, M2, M3) stockant une table de routage (6), une table de performance de service (5) qui stocke pour chaque service de l'au moins un service des données de performance, associées à deux ports de connexion (NI), ou plus, du routeur, et une table de route d'intérêt (7), une interface de réseau (NI) comprenant deux ports de connexion ou plus et une unité de commande (NC),
**caractérisé en ce que**
l'unité de commande (NC) est adaptée pour recevoir un paquet d'intérêt, qui a été envoyé par un autre routeur (N3) de la pluralité de routeurs (N1, ..., N9), associé à l'au moins un service comprenant un indicateur de nom de service (3a) et une étiquette d'intérêt unique (3b) par le biais d'un port de connexion entrant, envoyer le paquet d'intérêt par le biais d'un port de connexion sortant associé audit service dans la table de routage (6) et stocker l'étiquette d'intérêt (3b) du paquet d'intérêt reçu ainsi que le port de connexion entrant et le port de connexion sortant dans la table de route d'intérêt (7), recevoir le paquet d'intérêt comprenant les données, qui comprennent des données de charge de l'au moins un service, jointes au paquet d'intérêt par le serveur (S1) des au moins deux serveurs (S1, S2) par le biais du port de connexion sortant associé à l'étiquette d'intérêt (3b) stockée dans la table de route d'intérêt (7), calculer les données de performance de service sur la base des données jointes au paquet d'intérêt, stocker les données de performance de service dans la table de performance de service (5) et mettre à jour la table de routage (6) sur la base d'une évaluation des données de performance de service stockées dans la table de performance de service (5), et envoyer le paquet d'intérêt par le biais du port de connexion entrant associé par la table de route d'intérêt (7) à l'autre routeur (N3).

12. Routeur (N, N2) pour routage en fonction du service, selon la revendication 11, dans lequel la table de routage (6) fait partie de la commande d'acheminement rapide.
